# EUROPÄISCHE PATENTSCHRIFT

(11) **EP 4 428 497 B1**
(45) Veröffentlichungstag und Bekanntmachung des Hinweises auf die Patenterteilung: **23.07.2025**
(21) Anmeldenummer: 23160585.8
(22) Anmeldetag: 07.03.2023
(51) Int. Cl.: G01D 21/00

(54) **FELDGERÄT, SYSTEM UND VERFAHREN ZUM SPEICHERN VON POSITIONSINFORMATIONEN IN EINEM FELDGERÄT**
FIELD DEVICE, SYSTEM AND METHOD FOR STORING POSITION INFORMATION IN A FIELD DEVICE
APPAREIL DE TERRAIN, SYSTÈME ET PROCÉDÉ DE STOCKAGE D'INFORMATIONS DE POSITION DANS UN APPAREIL DE TERRAIN

(43) Veröffentlichungstag der Anmeldung: 11.09.2024
(73) Patentinhaber: VEGA Grieshaber KG, 77709 Wolfach (DE)
(72) Erfinder: Zimmermann, Florian, 78655 Dunningen (DE); Schnaitter, Michael, 77790 Steinach (DE)
(74) Vertreter: Patentanwälte Bauer Vorberg Kayser

(56) Entgegenhaltungen:
- WO-A1-2018/203205
- WO-A1-2020/048752
- DE-A1- 102012 108 990
- DE-A1- 102016 122 714
- DE-A1- 102020 133 616
- US-A1- 2015 002 185
- NIKON: "D7500 User Manual", 31 December 2017 (2017-12-31), pages 1 - 388, XP093055481, Retrieved from the Internet <URL:https://download.nikonimglib.com/archive5/klOGu00M9eZq05F2sau64oKBN109/D7500UM_EU(En)08.pdf> [retrieved on 20230619]

## Beschreibung

Die Erfindung betrifft ein System und ein Verfahren zum Speichern von Positionsinformationen in einem Feldgerät unter Nutzung eines mobilen Endgeräts, sowie ein entsprechendes Feldgerät und ein entsprechendes Computerprogrammprodukt.

Feldgeräte werden im Bereich der Automatisierungstechnik häufig eingesetzt und können sowohl Aktuatoren als auch Sensoren aufweisen. Die Sensoren weisen dabei mindestens eine Sensiereinheit auf, mit der eine physikalische Größe erfasst werden kann. Diese physikalische Größe kann beispielsweise einen Abstand, eine Länge, ein Volumen, einen Füllstand, einen Druck, eine Temperatur, eine Konzentration, eine Durchflussmenge, eine Feuchtigkeit, eine Lichtintensität, eine Spannung, ein Strom und/oder dergleichen umfassen. Aus der erfassten physikalischen Größe werden Sensordaten für die weitere Verwendung gewonnen.

In der Praxis sind häufig nicht nur die Sensordaten selbst von Interesse, sondern auch die Position des Feldgeräts, das die Sensordaten gewonnen hat. Diese Positionsinformationen können verschiedentlich genutzt werden. Beispielhaft sei auf eine einfachere Zuordnung der Sensordaten an eine Stelle in einer Produktionsstraße oder in einer Industrieanlage, eine vereinfachte Auffindbarkeit des Feldgeräts bei Wartungen oder dergleichen hingewiesen.

Bei stationär angeordneten Feldgeräten kann die Position manuell in einem Inventarsystem hinterlegt werden. Diese Herangehensweise ist jedoch aufwändig und fehleranfällig. Ferner ist dieser Ansatz bei einem Nutzen der Positionsinformationen nicht immer geeignet, da stets eine Verbindung zu dem Inventarsystem erforderlich ist.

Vereinfacht werden kann diese Herangehensweise mit der EP 3 217 629 A1. Während einer Neuregistrierung werden mittels eines mobilen Endgeräts Positionsinformationen gewonnen und an ein Internetportal gesendet. In dem Internetportal werden die Positionsinformationen zusammen mit Identifikationsinformationen des Feldgeräts abgespeichert. Dadurch kann die Inventarisierung erheblich vereinfacht werden. Die Notwendigkeit einer Verbindung zum Inventarsystem für die Nutzung der Positionsinformationen bleibt aber bestehen.

Ein anderer Ansatz besteht darin, das Feldgerät mit einer Positionsermittlungseinheit auszustatten. Diese Positionsermittlungseinheiten können ein GNSS - Global Navigation Satellite System - nutzen, das beispielsweise durch GPS - Global Positioning System - oder Galileo gebildet ist. Derartige Positionsermittlungseinheiten benötigen jedoch eine ausreichende Signalstärke der Satellitensignale, was eine Messung in einem Keller oder unter einem Blechdach ausschließt oder sehr energieintensiv macht. Ferner erzeugen diese Positionsermittlungseinheiten nicht unerhebliche Zusatzkosten.

Ein weiterer Ansatz ist in der EP 3 128 805 A2 offenbart. Dort ist bei einem Sensor ein RFID-Tag angeordnet, in dem Standortangaben und Identifikationsinformationen gespeichert sind. Ein RFID-Lesegerät liest die Informationen aus dem RFID-Tag aus und überträgt sie an einen Server. Wenn der Server Nachrichten von einem Sensor erhält, kann der Server die Nachricht mit dem zuvor empfangenen Standort verknüpfen. Nachteilig ist, dass auch hier zunächst die Position manuell in den RFID-Tag eingespeichert werden muss. Ferner sind die Standortangaben lediglich für das RFID-Lesegerät bzw. für den Server verfügbar und damit nur eingeschränkt nutzbar.

WO 2020/048752 A1 offenbart ein gattungsgemäßes Verfahren zum Übermitteln einer Feldgerätekoordinate eines Feldgeräts der Mess- und Automatisierungstechnik an das Feldgerät mittels eines mobilen Endgeräts.

DE 10 2012 108990 A1 offenbart ein gattungsgemäßes Verfahren zum Lokalisieren mindestens eines Feldgerätes in einer Automatisierungsanlage.

XP 93055481 A offenbart eine gattungsgemäße Bedienungsanleitung einer Digitalkamera.

DE 10 2020 133616 A1 offenbart ein gattungsgemäßes Verfahren zum Informieren über einen Fehlerfall in einer Anlage der Automatisierungstechnik.

US 2015/002185 A1 offenbart eine drahtlose Feldgerätebaugruppe.

DE 10 2016 122714 A1 offenbart einen gattungsgemäßen Adapter für ein 2-Draht-Feldgerät.

WO 2018/203205 A1 offenbart ein gattungsgemäßes Verfahren zur Verfolgung des Standorts von Wirtschaftsgütern, wobei an den Wirtschaftsgütern angebrachte Ortungsgeräte genutzt werden.

Der Erfindung liegt die Aufgabe zugrunde, die Nachteile des Stands der Technik auszuräumen oder zumindest zu reduzieren. Ein System gemäß dem Patentanspruch 2, ein Feldgerät gemäß dem Patentanspruch 1 und ein Verfahren gemäß dem Patentanspruch 13 werden bereitgestellt, bei dem Positionsinformationen für ein Feldgerät einfach und wenig fehleranfällig abgespeichert und auf einfache Weise für einen Zugriff durch das Feldgerät zur Verfügung gestellt werden können.

Diese Aufgabe wird durch die unabhängigen Ansprüche 1 und 13 gelöst. Weitere Ausgestaltungen offenbaren die jeweiligen Unteransprüche.

Es ist darauf hinzuweisen, dass die in den Ansprüchen einzeln aufgeführten Merkmale in beliebiger, technisch sinnvoller Weise miteinander kombiniert werden können (auch über Kategoriegrenzen, beispielsweise zwischen Verfahren und Vorrichtung, hinweg) und weitere Ausgestaltungen aufzeigen. Die Beschreibung charakterisiert und spezifiziert die Erfindung insbesondere im Zusammenhang mit den Figuren zusätzlich.

Es sei ferner angemerkt, dass eine hierin verwendete, zwischen zwei Merkmalen stehende und diese miteinander verknüpfende Konjunktion "und/oder" stets so auszulegen ist, dass in einer ersten Ausgestaltung lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Es ist erkannt worden, dass sich in vielen Anwendungsszenarien die Position eines Feldgeräts nicht oder äußerst selten ändert. Dadurch ist es in solchen Fällen nicht erforderlich, dass die Feldgeräte über eigene Mittel verfügen, mit denen deren Position ermittelt werden kann. Auf GNSS-Empfänger kann daher meist verzichtet werden. Vielmehr wird - gemäß der vorliegenden Offenbarung - ein mobiles Endgerät genutzt, das über eine Positionsermittlungseinheit verfügt und Positionsinformationen über eine Kommunikationsschnittstelle an das Feldgerät übermitteln kann. Das Feldgerät kann diese Positionsinformationen in einem Speicher ablegen. Um die Positionsinformationen für eine spätere Verwendung durch eine Feldgeräteelektronik nutzbar zu machen, kann dieser Speicher in der Feldgeräteelektronik angeordnet sein. Auf diese Weise lassen sich Positionsinformationen beispielsweise bei einer Einrichtung oder Parametrierung des Feldgeräts in dem Speicher ablegen und für eine spätere Nutzung verfügbar halten.

Ein System gemäß dem Patentanspruch 2, das diesen Grundgedanke verwirklichen kann, umfasst ein Feldgerät und ein mobiles Endgerät. Das Feldgerät umfasst mindestens einen Sensor, eine Feldgeräteelektronik, eine Kommunikationsschnittstelle, einen Speicher und eine Steuereinheit. Eine Aufgabe der Feldgeräteelektronik kann das Ansteuern des Sensors bzw. dessen mindestens einen Sensierelements zum jeweiligen Erfassen einer physikalischen Größe sein. Die Feldgeräteelektronik kann aber auch die Kommunikationsschnittstelle und die Steuereinheit umfassen. Zudem ist der Speicher für die Positionsinformationen in der Feldgeräteelektronik angeordnet. Das mobile Endgerät umfasst ebenfalls eine Kommunikationsschnittstelle sowie eine Positionsermittlungseinheit. Die Kommunikationsschnittstelle des Feldgeräts und die Kommunikationsschnittstelle des mobilen Endgeräts sind derart ausgebildet, dass ein wechselseitiger Austausch von Daten ermöglicht ist. In der Praxis dürfte diese insbesondere dadurch erreicht werden, dass die beiden Kommunikationsschnittstellen derselben oder einer kompatiblen Technik entsprechen.

Bei dem Betrieb dieses Systems ermittelt die Positionsermittlungseinheit Positionsinformationen und sendet diese - entweder direkt oder in angepasster Form - über die Kommunikationsschnittstellen an das Feldgerät. Die Steuereinheit des Feldgeräts empfängt die Positionsinformationen und legt diese in dem Speicher ab. Die Positionsinformationen können auf diese Weise für die weitere Benutzung zur Verfügung gestellt werden.

Der Begriff "Feldgerät" bezieht sich allgemein auf ein Gerät, das mindestens einen Sensor mit jeweils mindestens einem Sensierelement aufweist. Dabei kann das Feldgerät zusätzlich noch weitere Komponenten aufweisen, beispielsweise auch einen Aktuator. Auch wenn der Begriff maßgeblich in der Automatisierungstechnik Verwendung findet und dies auch ein bevorzugter Einsatzbereich darstellt, sei dennoch angemerkt, dass die vorliegende Offenbarung nicht zwingend auf die Automatisierungstechnik beschränkt ist. Die vorliegende Offenbarung kann überall dort Anwendung finden, wo die Lokalisation von Sensoren erforderlich ist und sich die Position der Sensoren nicht oder selten verändert. Dies kann auch umfassen, dass die Sensoren innerhalb eines Bezugssystems stationär angeordnet sind und sich das Bezugssystem bewegt. Ein derartiges Bezugssystem kann beispielsweise ein Zug, ein Container oder ein Schiff sein.

Als "Sensierelement" wird vorliegend der Teil des Sensors aufgefasst, der eine physikalische Größe erfasst und in ein elektrisches Signal umwandet. Wie konkret diese Umwandlung erfolgt, ist nicht erheblich und wird von der jeweiligen, zu detektierenden physikalischen Größe abhängen. Lediglich bespielhaft sei auf die Detektion eines Abstands, einer Länge, eines Volumens, eines Füllstands, eines Grenzstands, eines Drucks, einer Temperatur, einer Konzentration, einer Durchflussmenge, einer Feuchtigkeit, einer Lichtintensität, einer Spannung oder eines Strom verwiesen, wobei diese Beispiele weder als abschließende noch als einschränkende Aufzählung verstanden werden sollten.

Die "Feldgeräteelektronik" kann auf verschiedenste Weise implementiert sein. Es ist eine Implementierung auf einer Leiterplatte denkbar. Allerdings können auch mehrere untereinander elektrisch verbundene Leiterplatten genutzt werden. Dabei dürfte die Feldgeräteelektronik aus verschiedenen Komponenten zusammengesetzt sein, die passive Bauteile und aktive Bauteile umfassen. Dabei dürften auch integrierte Schaltungen zum Einsatz kommen, beispielsweise ein oder mehrere Prozessoren. Die Feldgerätelektronik kann auch Bestandteil einer austauschbaren Elektronikeinheit sein, die beispielsweise als Anzeige- und/oder Bedieneinheit fungieren kann.

Der Begriff "Steuereinheit" bezieht sich vorliegend auf die Funktion des Empfangens von Positionsinformationen und des Speicherns der empfangenen Positionsinformationen in dem Speicher. Dies bedeutet nicht, dass die Steuereinheit des Feldgeräts lediglich diese Funktionen verwirklichen kann. Vielmehr ist durch die vorliegende Offenbarung auch abgedeckt, dass die Steuereinheit noch weitere Funktionen des Feldgeräts steuert.

Die "Steuereinheit" kann in der Feldgeräteelektronik implementiert sein. Dabei kann die Funktion dieser Steuereinheit zusammen mit anderen Funktionen des Feldgeräts gemeinsam in einem Prozessor, einer Logikschaltung oder dergleichen implementiert sein. Vor dem Hintergrund eines energieeffizienten Nutzens der vorliegenden Offenbarung kann es sich aber auch anbieten, die Steuereinheit in einem separaten Teil der Feldgeräteelektronik, beispielsweise einem separaten Mikrocontroller, zu implementieren. Auf diese Weise kann in einem Einrichtungsmodus lediglich dieser separate Teil mit Energie versorgt werden, während andere Teile des Feldgeräteelektronik abgeschaltet oder in einem Schlafmodus bleiben können.

Auch das "mobile Endgerät" kann verschiedentlich implementiert sein. Wesentlich ist, dass das mobile Endgerät über eine Kommunikationsschnittstelle mit dem Feldgerät kommunizieren kann und eine Positionsermittlungseinheit umfasst. Zudem dürfte es für den vorliegenden offenbarten Zweck vorteilhaft sein, wenn die mobilen Endgeräte mobil sind, d.h. relativ flexibel in ihrer Position verändert werden können. In welcher Weise diese Anforderungen erfüllt sind, ist nicht von entscheidender Bedeutung. In einer Ausgestaltung ist das mobile Endgerät durch ein dediziertes Handgerät bildet, das speziell auf die hier offenbarte Nutzung ausgerichtet ist. In einer anderen Ausgestaltung ist das mobile Endgerät durch ein Smartphone, eine Smartwatch, ein Tablet oder ein anderes mobiles Vielzweckgerät gebildet, die/das durch geeignete Software für eine Verwendung in dem hier offenbarten System einsetzbar gemacht wird.

Die "Kommunikationsschnittstelle" kann ebenfalls verschiedentlich ausgebildet sein. Wichtig ist, dass das Feldgerät und das mobile Endgerät über diese Kommunikationsschnittstelle Daten untereinander austauschen können. Dies bedeutet üblicherweise, dass die Kommunikationsschnittstellen demselben Standard oder allgemein derselben Technik entsprechen oder zumindest zueinander kompatibel sind. In der Praxis kann diese Anforderung aber von der verschiedensten Kommunikationsschnittstellen erfüllt werden. Da üblicherweise keine großen Datenmengen auszutauschen sind und eine Übertragungsverzögerung meist eine geringe Bedeutung haben dürfte, sind prinzipiell auch eher langsame Kommunikationsschnittstellen mit lediglich geringer Übertragungsrate einsetzbar. Es können sowohl drahtgebundene als auch drahtlos arbeitende Kommunikationsschnittstellen eingesetzt werden. Aufgrund der einfacheren Handhabbarkeit kommen bevorzugt letztere zum Einsatz, besonderes bevorzugterweise funkbasierte Kommunikationsschnittstellen.

Da die Positionsinformation, die für das Feldgerät abgespeichert werden soll, auf den Positionsinformationen für das mobile Endgerät basiert, dürfte es sich zudem anbieten, wenn bei der Ermittlung und Speicherung der Positionsinformationen zwischen dem Feldgerät und dem mobilen Endgerät kein allzu großer Abstand besteht. Dies kann am sichersten dadurch gewährleistet werden, indem die Kommunikationsschnittstelle lediglich über eine beschränkte Reichweite verfügt. Daher ist die Kommunikationsschnittstelle vorzugsweise für eine Kommunikation im Nahbereich ausgebildet, d.h. für eine Kommunikation müssen die teilnehmenden Kommunikationspartner nicht allzu weit voneinander entfernt sein. In der Praxis bedeutet dies regelmäßig, dass die Entfernung maximal 100 Meter beträgt, vielfach maximal 50 Meter. Vorzugsweise ist die Reichweite der Kommunikationsschnittstelle maximal 20 Meter groß.

Beispiele für prinzipiell nutzbare drahtlose Kommunikationsschnittstellen sind WLAN (Wireless Local Area Network), Bluetooth, Bluetooth LE (Low Energy Bluetooth), UWB (Ultra Wide Band), NFC (Near Field Communication) oder auch Qi. Auch hier sollte diese Aufzählung nicht als abschließend oder einschränkend verstanden werden.

Unter WIFI, auch als wireless LAN (WLAN) gemäß IEEE 802.11 bekannt, ist eine Datenübertragung per Funksignal gemeint. Es handelt sich hierbei um den wohl gängigsten Standard zur Datenübertragung per Funk im Office-, Heim- und Industriebereich.

Bei Bluetooth handelt es sich um einen Industriestandard gemäß IEEE 802.15.1 für die Datenübertragung per Funksignal über kurze Distanzen, beispielsweise maximal 10 Meter.

UWB beschreibt einen Ansatz für Nahbereichskommunikation, bei dem ein Frequenzbereich mit großer Bandbreite von typischerweise mindestens 500MHz oder mindestens 20% des arithmetischen Mittelwerts zwischen einer untern und einer oberen Grenzfrequenz des genutzten Frequenzbands verwendet wird. Die Daten werden in möglichst kurzen Pulsen übertragen. UWB-Technologien sind beispielsweise in IEEE 802.15.3a oder IEEE 802.15.4a beschrieben.

Unter NFC ist ein auf der RFID-Technik basierender, internationaler Übertragungsstandard zum kontaktlosen Austausch von Daten per elektromagnetischer Induktion mittels loser gekoppelter Spulen über kurze Strecken von wenigen Zentimetern bei einer Frequenz von 13,56 MHz.

Qi ist ein proprietärer Standard des Wireless Power Consortiums für eine drahtlose Energieübertragung. Damit können beispielsweise Smartphones oder Smartwatches kontaktlos geladen werden. Gängige Übertragungsleistungen liegen zwischen 5 Watt und 15 Watt. Zudem können Daten mit einer Datenrate von wenigen Kilobits pro Sekunde übertragen werden.

Was "Positionsinformationen" im Zusammenhang mit der vorliegenden Offenbarung konkret bedeutet, dürfte von dem jeweiligen Einsatzszenarium abhängen. Generell sollten die Positionsinformationen dazu in der Lage sein, die Position des Feldgeräts in einem Raum zu beschreiben. Dabei kann sich der Begriff "Raum" tatsächlich auf einen bestimmten Raum oder abstrakt auf eine dreidimensionale Anordnung beziehen. Hierzu kann es ausreichend sein, dass das Feldgeräte beispielsweise einem bestimmten Areal oder einem bestimmten Gebäude zugeordnet werden kann. Es kann aber auch erforderlich sein, die Position eines Feldgeräts konkreter zu kennen, beispielsweise ob ein Feldgerät in einer bestimmten Anlage, einer bestimmten Maschine oder einem bestimmten Teil einer Maschine zum Einsatz kommt. Je nach Einsatzszenarium sollten die Positionsinformationen für die benötigte Genauigkeit geeignet sein.

Die Positionsinformationen können verschiedentlich repräsentiert sein. So kann sich die Positionsinformation auf ein Areal, ein Gebäude, eine Anlage oder eine Maschine beschränken. Vorzugweise geben die Positionsinformationen jedoch Koordinaten in einem Raum an, an denen oder in deren Nähe das Feldgerät angeordnet ist. Diese Koordination können globale Koordinaten sein. Die Koordination können jedoch auch relative Koordination sein, sodass die Position des Feldgeräts relativ zu einem Referenzpunkt festlegbar ist. Diese wenigen Beispiele, die nicht als abschließend oder beschränkend verstanden werden sollten, lassen erkennen, wie universell die Positionsinformationen sind.

Entsprechend kann die "Positionsermittlungseinheit" verschiedentlich ausgebildet sein. Von Bedeutung dürfte sein, dass sich eine Position in der Nähe des Feldgeräts mit der Positionsermittlungseinheit auch tatsächlich ermitteln lässt. Denn vorzugsweise wird das mobile Endgerät zwischen dem Ermitteln der Position durch die Positionsermittlungseinheit und dem Speichern der Positionsinformationen in dem Feldgerät nicht oder lediglich unwesentlich relativ zu dem Feldgerät bewegt. Wenn bei dem Feldgerät keine GPS-Signale empfangbar sind, ist ein GPS-Empfänger als Positionsermittlungseinheit ungeeignet. Dann muss auf andere Positionsermittlungseinheiten zurückgegriffen werden. Ansonsten dürften bei einem vorhandenen mobilen Endgeräte eine dort vorhandene Positionsermittlungseinheit verwendet werden. Sofern diese für das Ermitteln der Positionsinformationen mit ausreichender Genauigkeit in der Lage sind, können sie im Rahmen der vorliegenden Offenbarung prinzipiell eingesetzt werden. Wenn ein mobiles Endgerät für den vorliegend offenbarten Einsatz dediziert konzipiert wird, kann die geforderte Genauigkeit der Positionsinformationen ein Ausgangspunkt für die Wahl einer geeigneten Positionsermittlungseinheit bilden.

Auch der "Speicher" kann verschiedentlich ausgebildet sein. Es dürfte sich anbieten, wenn der Speicher nichtflüchtig ist, damit auch nach einem Trennen einer Energieversorgung die Positionsinformationen erhalten bleiben. Beispielhaft sei auf EPROM (Electronically Programable Read Only Memory), EEPROM (Electronically Erasable Programable Read Only Memory), MRAM (Magnetoresistive Random Access Memory), NVRAM (Non Volatile Random Access Memory) oder Flash-Speicher verwiesen. Allerdings könnte auch ein flüchtiger Speicher verwendet werden, dessen Speicherinhalt beispielsweise über Pufferelement, beispielsweise einen Gold Cap (oder einen sonstigen Kondensator) oder einen Akkumulator, abgesichert ist. Hierzu sei beispielsweise auf RAM (Random Access Memory) verwiesen.

Es sei darauf hingewiesen, dass der "Speicher" nicht zwingend ein dedizierter Speicherbaustein für das Speichern von Positionsinformationen sein muss. Vielmehr könnte der "Speicher" auch als Teilbereich eines für andere Zwecke bereitgestellten Speichers sein. Andererseits muss der "Speicher" auch nicht exklusiv für das Speichern von Positionsinformationen zur Verfügung stehen, solange die Fähigkeit für das Speichern der Positionsinformationen gewährleistet bleibt. So könnten beispielsweise in dem "Speicher" auch Informationen abgelegt werden, wie beispielsweise ein Zeitpunkt der Positionsermittlung, ein letzter Benutzer, eine Identifikation des genutzten mobilen Endgeräts, allgemeine Diagnosedaten, Umgebungsdaten (wie Sprache, Land, Höhe), etc.

Das hier offenbarte System kann insgesamt auf verschiedene Weise implementiert sein. Prinzipiell kann das System, insbesondere das Feldgerät und das mobile Endgeräte, vollständig durch Hardware implementiert sein. In einer anderen Ausgestaltung ist das System durch eine Kombination aus Hardware und Software implementiert. Die Hardware kann dabei Sensoren, Analog-Digital-Wandler, Filter (beispielsweise Hochpass-, Tiefpass-, Bandpassfilter), Prozessoren (beispielsweise einen Mikrocontroller, digitaler Signalprozessor oder ASIC (Application Specific Integrated Circuit)) und/oder eine programmierbare Logikschaltung (beispielsweise einen FPGA (Field Programmable Gate Array) oder CPLD (Complex Programmable Logic Device)) umfassen. Ferner kann ein oder mehrere weitere Speicher vorhanden sein, beispielsweise RAM (Random Access Memory), ROM (Read Only Memory) oder Flasch-Speicher, auf den andere Hardware-Komponenten zugreifen können. Software kann die jeweiligen Komponenten steuern, beispielsweise den Prozessor oder Parameter eines Analog-Digital-Wandlers. Bei einem mobilen Endgerät, das durch ein Smartphone oder ein Tablet gebildet ist, kann zudem ein Betriebssystem, beispielsweise Android oder iOS, zum Einsatz kommen, wobei die Funktionalität zur Verwendung in dem hier offenbarten System durch entsprechende Programme, beispielsweise Apps, erreicht werden kann.

In einer Ausgestaltung ist das mobile Endgerät dazu ausgebildet, mittels der Positionsermittlungseinheit ermittelte Positionsinformationen über die Kommunikationsschnittstelle an das Feldgerät zu übertragen, wobei die mittels der Positionsermittlungseinheit ermittelten Positionsinformationen als repräsentativ für die Position des Feldgeräts angenommen werden. Auf diese Weise lassen sich besonders einfach Positionsinformationen für das Feldgerät ermitteln. Dieser Ansatz kann gerade dann präzise Positionsinformationen für das Feldgerät liefern, wenn sich das mobile Endgerät beim Ermitteln der Position mittels Positionsermittlungseinheit ausreichend nahe bei dem Feldgerät befindet. Wie nahe das mobile Endgerät hierzu bei dem Feldgerät angeordnet sein sollte, kann von verschiedenen Faktoren abhängen. Je höher die Genauigkeit der Positionsermittlung durch die Positionsermittlungseinheit ist, umso interessanter ist eine räumliche Nähe zwischen mobilem Endgerät und Feldgerät. "Nahe" kann ein Abstand von weniger als 10 Meter sein, in einer anderen Ausgestaltung maximal 2 Meter, in einer noch anderen Ausgestaltung maximal 1 Meter, in einer weiteren Ausgestaltung maximal 50 Zentimeter, in einer noch weiteren Ausgestaltung maximal 10 Zentimeter. Eine ausreichende "Nähe" könnte einerseits durch einen entsprechenden Hinweis an eine Bedienperson erreicht werden. Das System könnte dann annehmen, dass die Bedienperson das mobile Endgerät ausreichend nahe an das Feldgerät hält, wenn das Verfahren ausgelöst wird. Zusätzlich oder alternativ können technische Mittel diese "Nähe" sicherstellen, indem beispielsweise eine Entfernung zwischen mobilem Endgerät und Feldgerät ermittelt wird oder indem Kommunikationsschnittstellen mit ausreichend kurzer Reichweite verwendet werden.

In einer Ausgestaltung ist das mobile Endgerät dazu ausgebildet, eine relative Position des Feldgeräts relativ zu dem mobilen Endgerät zu ermitteln und basierend auf mittels der Positionsermittlungseinheit ermittelten Positionsinformationen und der relativen Position des Feldgeräts angepasste Positionsinformationen für das Feldgerät zu ermitteln und die angepassten Positionsinformationen über die Kommunikationsschnittstelle an das Feldgerät zu übertragen. Eine derartige Anpassung der Positionsinformationen ermöglicht eine präzise Positionsermittlung bei gleichzeitiger hoher Freiheit bei der Bedienung. Denn nicht immer können Feldgeräte an deren Installationsposition ausreichend gut erreicht werden. Die Erfassung der relativen Position zwischen einem mobilen Endgerät und dem Feldgerät könnte beispielsweise aus Laufzeiten von Funksignalen an unterschiedlichen Positionen ermittelt werden.

In einer Ausgestaltung ist die Feldgeräteelektronik zum Zugreifen und/oder Nutzen von in dem Speicher abgelegten Positionsinformationen ausgebildet. Auf diese Weise kann ein Mehrwert der Positionsinformationen generiert werden. Dadurch kann das Feldgerät beispielsweise einen ermittelten Messwert zusammen mit Positionsinformationen an ein Cloud-System senden.

In einer Ausgestaltung ist die Kommunikationsschnittstelle des mobilen Endgerätes und/oder die Kommunikationsschnittstelle des Feldgeräts für eine drahtlose, vorzugsweise funkbasierte, Kommunikation mit einer maximalen Reichweite von 10 Metern, besonders bevorzugter Weise mit einer maximalen Reichweite von 5 Metern, ganz besonders bevorzugter Weise mit einer maximalen Reichweite von 1 Meter, weiter bevorzugter Weise mit einer maximalen Reichweite von 0,5 Metern ausgebildet. Bei einer Reichweite von maximal 10 Metern kann die Anzahl potenziell gleichzeitig empfangbarer Feldgeräte klein gehalten werden. Gleichzeitig kann - insbesondere bei einer Bestimmung der relativen Position des Feldgeräts relativ zu dem mobilen Endgerät - die Bestimmung der relativen Position ausreichend genau sein. Diese Effekte können bei einer Reichweite von maximal 5 Metern noch weiter verbessert werden. Bei einer Reichweite von maximal 50 Zentimetern stimmen die Positionen zwischen mobilem Endgerät und Feldgerät recht genau überein, sodass auf eine Anpassung von Positionsinformationen, die durch die Positionsermittlungseinheit ermittelt worden sind, meist verzichtet werden kann. Dieser Effekt kann noch weiter verbessert werden, wenn die maximale Reichweite lediglich 10 Zentimeter beträgt.

Die Kommunikationsschnittstelle des mobilen Endgerätes und die Kommunikationsschnittstelle des Feldgeräts sind zusätzlich zur Energieübertragung von dem mobilen Endgerät zu dem Feldgerät ausgebildet, wobei über die Kommunikationsschnittstelle übertragene Energie zum Versorgen der Steuereinheit und des Speichers des Feldgeräts nutzbar ist. Auf diese Weise lassen sich auch Feldgeräte mit Positionsinformationen versehen, die noch nicht oder aktuell nicht mit einer Energieversorgung verbunden sind. So kann beispielsweise ein Feldgerät bereits mechanisch installiert worden sein, ohne dass eine Busverbindung zum Versorgen des Feldgeräts vorhanden ist. Dennoch ist die Parametrierung des Feldgeräts dadurch erreichbar. Zudem ist es möglich, dass das Feldgerät für die Parametrierung vollständig von der Stromversorgung genommen wird oder der Sensor aktuell inaktiv ist. Insgesamt kann durch eine Energieübertragung mittels der Kommunikationsschnittstelle eine weitere Flexibilisierung erreicht werden.

In einer Ausgestaltung basieren die Kommunikationsschnittstelle des mobilen Endgerätes und die Kommunikationsschnittstelle des Feldgeräts auf Bluetooth, Bluetooth LE, NFC - Near Field Communication - oder Qi. Bluetooth ist ein weitverbreiteter Funkstandard, sodass eine hohe Anzahl potenziell geeigneter mobiler Endgeräte verfügbar ist. Bluetooth LE kann als Niedrigenergieversion von Bluetooth den Energieverbrauch reduzieren. NFC ist eine Kommunikationstechnik, die in fast allen modernen Smartphones, Smartwatches oder Tablets implementiert ist, sodass dort eine Vielzahl von nutzbaren mobilen Endgeräten existiert. Ferner ist die Reichweite von NFC recht kurz, sodass die Positionen des mobilen Endgeräts und des Feldgeräts recht nahe beieinander liegen müssen. Qi ist eigentlich für das Laden von Smartphones oder anderer mobiler Geräte bekannt. Allerdings kann über die Schnittstelle neben der Energie auch Daten übertragen werden, wobei die recht geringe Datenrate für die vorliegenden Zwecke vollkommen ausreichend ist. Zudem ist ein maximaler Abstand von wenigen Zentimetern zwischen mobilem Endgerät und Feldgerät erforderlich, sodass deren Positionen praktisch als identisch angenommen werden können. Die Energie dürfte von dem mobilen Endgerät zu dem Feldgerät übertragen werden.

In einer Ausgestaltung weist das Feldgerät eine Energieversorgung auf, vorzugsweise in Form einer Batterie und/oder in Form von Mitteln zum Energy-Harvesting, wobei die Energieversorgung zur Versorgung von zumindest Teilen der Feldgeräteelektronik ausgebildet. Auf diese Weise kann die Feldgeräteelektronik auch ohne eine dedizierte Energieübertragung von außen erfolgen. Als Energy-Harvesting können alle Maßnahmen aufgefasst werden, mit denen Energie aus externen Quellen ohne dedizierte Anschlüsse gewonnen werden. Dazu gehören beispielsweise auch Photovoltaikmodule.

In einer Ausgestaltung weist das Feldgerät eine weitere Kommunikationsschnittstelle auf, wobei die weitere Kommunikationsschnittstelle vorzugsweise für eine Kommunikation mit einem Bus ausgebildet ist. Das Bereitstellen einer weiteren Kommunikationsschnittstelle bietet eine universellere Kommunikationsmöglichkeit für das Feldgerät, beispielsweise zum Versenden von Messwerten, Status- oder Warnmeldungen oder für einen Zugriff auf das Feldgerät von einer Steuereinrichtung aus. Zwar könnte auch die Kommunikationsschnittstelle, die für den Empfang der Positionsinformationen von dem mobilen Endgerät genutzt wird, für eine derartige Kommunikation genutzt werden. Allerdings bietet eine weitere Kommunikationsschnittstelle eine größere Flexibilität, beispielsweise hinsichtlich der Reichweite. Die weitere Kommunikationsschnittstelle kann kabelgebunden oder kabellos ausgebildet sein. Sie kann für eine Nahbereichs- oder Weitbereichskommunikation ausgebildet sein. Beispielhaft sei auf eine Schnittstelle nach 4..20mA-Standard, für einen Profibus, LoRaWAN, LTE-M (Long Term Evolution for Machine type communication), NB-IoT (Narrow Band Internet of Things), WirelessHART (IEC 62591), Sigfox (Sigfox Proprietary) oder GSM (Global System for Mobile communications) verwiesen, um lediglich einige, generell mögliche Beispiele zu nennen. In einer Weiterbildung ermöglicht die weitere Kommunikationsschnittstelle eine Ankopplung an einen Datenbus. Auf diese Weise lässt sich ein Verbindungsaufwand und eine Verwaltung des Feldgeräts vereinfachen.

In einer Weiterbildung ist die weitere Kommunikationsschnittstelle dazu ausgebildet, zur Energieübertragung zur Versorgung von zumindest Teilen der Feldgeräteelektronik genutzt zu werden. Auf dieser Weise kann das Feldgerät während des Betriebs einfach mit Energie versorgt werden. Diese Weiterbildung dürfte in den meisten Fällen zusammen mit einer drahtgebundenen Ausgestaltung der weiteren Kommunikationsschnittstelle verwirklicht sein.

In einer Ausgestaltung umfasst die Positionsermittlungseinheit einen Empfänger für ein GNSS - Global Navigation Satellite System - und ist zum Ermitteln von globalen Positionsinformationen basierend auf Signalen aus dem GNSS ausgebildet. Generell basiert ein GNSS auf verschiedenen Satelliten, die Funksignale aussenden. Aus empfangenen Funksignalen kann dann auf die Position geschlossen werden. Wie das GNSS konkret funktioniert, hängt von dem jeweiligen System ab. Bekannte GNSS sind beispielsweise GPS, Galileo, Glonass, Beidou oder IRNSS.

In einer Ausgestaltung ist die Positionsermittlungseinheit zum Empfangen von Beacon-Signalen von mehreren Sendern bekannter Position und zum Ermitteln einer absoluten oder relativen Position durch Auswerten empfangener Beacon-Signale ausgebildet. Auf diese Weise kann auch in Bereichen, in denen beispielsweise der Empfang eines GNSS-Signals nicht sichergestellt ist, eine Positionsermittlung erfolgen. Derartige Sender können beispielsweise WiFi-Access-Points sein. Es können aber auch dedizierte Standortreferenzsender genutzt werden, um nicht abschließend und einschränkend lediglich zwei denkbare Ausgestaltungen zu nennen. Die Beacon-Signale können durch dedizierte Signale gebildet sein. Es ist aber auch denkbar, dass "gewöhnliche" Funksignale, die eigentlich für eine Kommunikation genutzt werden, als derartige Beacon-Signale genutzt werden. Solange aus empfangenen Signalen eine Laufzeit der Signals oder in sonstiger Weise ein Abstand zu dem jeweiligen Sender ermittelbar ist, kann ein derartiges Signal prinzipiell im Sinne dieser Ausgestaltung genutzt werden. Mit Kenntnis der Position der Sender und mit den ermittelten Abständen kann auf die Position des mobilen Endgeräts geschlossen werden.

Weitere Merkmale und Vorteile der Erfindung ergeben sich aus der folgenden Beschreibung nicht einschränkend zu verstehender Ausführungsbeispiele der Erfindung, die im Folgenden unter Bezugnahme auf die Zeichnung näher erläutert wird. In dieser Zeichnung zeigen schematisch:
- Fig. 1: ein Ausführungsbeispiel eines System gemäß der vorliegenden Offenbarung mit einem mobilen Endgerät und einem Feldgerät und
- Fig. 2: ein Ausführungsbeispiel eines Verfahrens gemäß der vorliegenden Offenbarung.

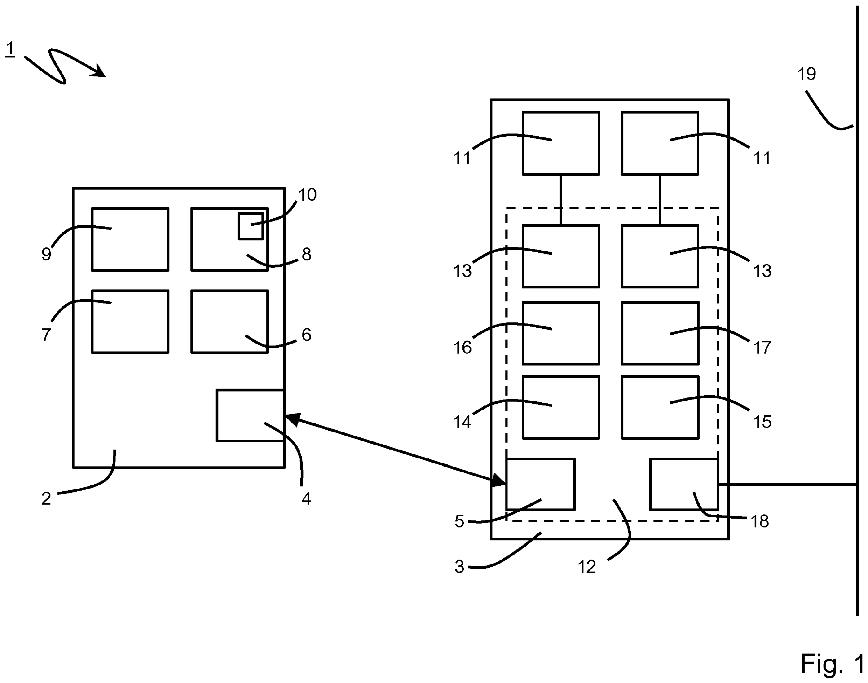

Fig. 1 offenbart ein Ausführungsbeispiel eines Systems 1 gemäß der vorliegenden Offenbarung, das ein mobiles Endgerät 2 und ein Feldgerät 3 umfasst. Dabei kann das mobile Endgerät 3 ein geeignet programmiertes Smartphone sein. Das mobile Endgerät 2 umfasst eine Kommunikationsschnittstelle 4 mit der eine wechselseitige Kommunikation mit einer Kommunikationsschnittstelle 5 des Feldgeräts 3 ermöglicht ist. Diese Kommunikationsschnittstelle 4, 5 kann beispielsweise auf dem Qi-Standard beruhen, sodass sowohl Daten als auch Energie von dem mobilen Endgerät 2 zu dem Feldgerät 3 übertragbar ist. Daten sind in beide Richtungen übertragbar, weshalb in Fig. 1 die beiden Blöcke, die die Kommunikationsschnittstellen 4, 5 darstellen sollen, mit einem Doppelpfeil verbunden sind.

Das mobile Endgerät 2 umfasst ferner eine Positionsermittlungseinheit 6, einen Prozessor 7, einen Speicher 8 und Benutzerschnittstellen 9. Die Positionsermittlungseinheit 6 ist dazu ausgebildet, eine Position des mobilen Endgeräts 2 zu ermitteln, und kann einen GPS-Empfänger umfassen. Der Speicher 8 kann ein Computerprogrammprodukt 10 (beispielsweise eine App) enthalten, das auf dem Prozessor 7 ausgeführt werden kann und das mobile Endgerät 2 für eine Teilnahme an dem System 1 befähigt. Der Speicher 8 kann flüchtigen Speicher, beispielsweise RAM, und nicht-flüchtigen Speicher, beispielsweise einen Flash-Speicher, umfassen. Zudem kann in dem Speicher 8 weitere Software gespeichert sein, wie beispielsweise ein Betriebssystem für das mobile Endgerät 2. Die Benutzerschnittstellen 9 können Ausgabemittel, wie einen Bildschirm oder Lautsprecher, und Eingabemittel, wie eine berührungssensitive Oberfläche des Bildschirms, eine Tastatur oder dergleichen, umfassen.

Das Feldgerät umfasst zwei Sensoren 11 und eine Feldgeräteelektronik 12. Die beiden Sensoren 11 umfassen jeweils ein Sensierelement (nicht dargestellt) zum Erfassen einer physikalischen Größe und sind beispielsweise durch einen Grenzstandsensor und einem Temperatursensor gebildet. Die Sensoren 11 werden jeweils durch eine Ansteuerungseinheit 13 in der Feldgeräteelektronik 12 angesteuert. Neben der Kommunikationsschnittstelle 5 und der beiden Ansteuereinheiten 13 umfasst die Feldgeräteelektronik 12 eine Steuereinheit 14, einen Speicher 15, einen Prozessor 16, einen weiteren Speicher 17 und eine weitere Kommunikationsschnittstelle 18. Der Speicher 15 ist zum Speichern von Positionsinformationen ausgebildet und als nicht-flüchtiger Speicher implementiert. Die Steuereinheit 14 ist kommunizierend mit der Kommunikationsschnittstelle 5 und dem Speicher 15 verbunden. Auf diese Weise kann die Steuereinheit 14 Positionsinformationen über die Kommunikationsschnittstelle 5 von dem mobilen Endgerät 2 empfangen und in dem Speicher 15 ablegen. Die Steuereinheit 14 ist dabei in einem separaten Mikroprozessor implementiert, wodurch ein Einrichtungsmodus mit einer getrennten Energieversorgung für Kommunikationsschnittstelle 5, Steuereinheit 14 und Speicher 15 möglich ist. Der Prozessor 16 dient der Steuerung der Funktionen des Feldgeräts 3. Dabei kann der Prozessor 16 auf den weiteren Speicher 17 zugreifen, der - in dieser Ausgestaltung - getrennt von dem Speicher 15 ausgebildet ist und beispielsweise einen RAM und Flash-Speicher umfassen kann. Die weitere Kommunikationsschnittstelle 18 ermöglicht eine Ankopplung des Feldgeräts 3 an einen Datenbus 19.

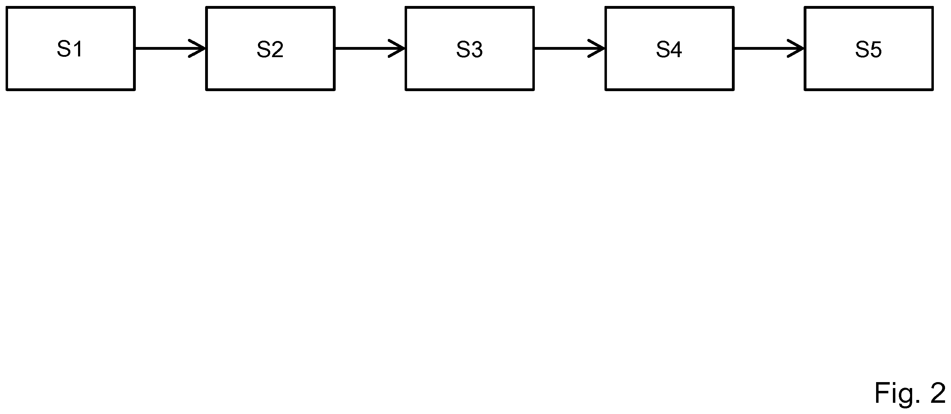

Beim Betrieb dieses Systems 1 kann ein Verfahren nach dem Ausführungsbeispiel gemäß Fig. 2 genutzt werden. In einem ersten Schritt S1 wird zunächst ein Einrichtungsmodus aktiviert. Hierzu wird angenommen, dass das mobile Endgerät 2 in der Nähe des Feldgeräts 3 angeordnet ist und die Kommunikationsschnittstellen 4, 5 miteinander kommunizieren können. Dies kann auch ein Versorgen der Kommunikationsschnittstelle 5, der Steuereinheit 14 und des Speichers 15 über die Kommunikationsschnittstelle 4 und ein Vorbereiten der beteiligten Komponenten beinhalten. In Schritt S2 werden durch die Positionsermittlungseinheit 6 Positionsinformationen ermittelt. Da angenommen wird, dass das mobile Endgerät 2 sehr nahe bei dem Feldgerät 3 angeordnet ist, d.h. näher als 10 Zentimeter, können die ermittelten Positionsinformationen des mobilen Endgeräts als repräsentativ für das Feldgerät angesehen werden. In Schritt S3 werden diese ermittelten Positionsinformationen daher direkt und ohne weitere Anpassung über die Kommunikationsschnittstelle 4 des mobilen Endgeräts 2 an die Kommunikationsschnittstelle 5 des Feldgeräts 3 gesendet. In Schritt S4 werden die Positionsinformationen bei dem Feldgerät 3 empfangen und durch die Steuereinheit 14 weiterverarbeitet. In Schritt S5 werden die empfangenen Positionsinformationen in dem Speicher 15 abgespeichert.

Hinsichtlich weiterer vorteilhafter Ausgestaltungen wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: System
- 2: Mobiles Endgerät
- 3: Feldgerät
- 4: Kommunikationsschnittstelle (mobiles Endgerät)
- 5: Kommunikationsschnittstelle (Feldgerät)
- 6: Positionsermittlungseinheit
- 7: Prozessor (mobiles Endgerät)
- 8: Speicher (mobiles Endgerät)
- 9: Benutzerschnittstellen
- 10: Computerprogrammprodukt
- 11: Sensor
- 12: Feldgeräteelektronik
- 13: Ansteuereinheit
- 14: Steuereinheit
- 15: Speicher
- 16: Prozessor
- 17: Weiterer Speicher
- 18: Weitere Kommunikationsschnittstelle
- 19: Datenbus

## Patentansprüche

1. Feldgerät (3) mit einem Speicher für Positionsinformationen, umfassend:
mindestens einen Sensor (11) und eine Feldgeräteelektronik (12), wobei der mindestens eine Sensor (11) jeweils mindestens eine Sensiereinheit zum Erfassen einer physikalischen Größe aufweist und wobei die Feldgeräteelektronik (12) zum Ansteuern des mindestens einen Sensors (11) ausgebildet ist,
einen Speicher (15), der zum Speichern von Positionsinformationen ausgebildet und in der Feldgeräteelektronik (12) angeordnet ist,
eine Kommunikationsschnittstelle (5), die für einen wechselseitigen Austausch von Daten mit einem mobilen Endgerät (2), vorzugsweise in einem Nahbereich, und zum Empfangen von Positionsinformationen von dem mobilen Endgerät (2) ausgebildet ist,
eine Steuereinheit (14), die kommunizierend mit der Kommunikationsschnittstelle (5) und dem Speicher (15) verbunden und dazu ausgebildet ist, über die Kommunikationsschnittstelle (5) empfangene Positionsinformationen in dem Speicher (15) abzuspeichern,
wobei die Kommunikationsschnittstelle (5) des Feldgeräts (3) zusätzlich zur Energieübertragung von dem mobilen Endgerät (2) zu dem Feldgerät (3) ausgebildet ist, und wobei über die Kommunikationsschnittstellen (4, 5) übertragene Energie zum Versorgen der Steuereinheit (14) und des Speichers (15) des Feldgeräts (3) nutzbar ist.

2. System zum Speichern von Positionsinformationen in einem Feldgerät (3), zumindest umfassend ein Feldgerät (3) nach Anspruch 1 und ein mobiles Endgerät (2),
wobei das mobile Endgerät (2) eine Kommunikationsschnittstelle (4) und eine Positionsermittlungseinheit (6) umfasst, wobei die Positionsermittlungseinheit (6) zum Ermitteln von Positionsinformationen zum Beschreiben der Position des mobilen Endgeräts (2) in einem Raum ausgebildet ist,
wobei die Kommunikationsschnittstelle (4) des mobilen Endgeräts (2) und die Kommunikationsschnittstelle (5) des Feldgeräts (3) zum wechselseitigen Austauschen von Daten, vorzugsweise in einem Nahbereich, und für ein Übertragen von Positionsinformationen von dem mobilen Endgerät (2) zu dem Feldgerät (3) ausgebildet sind,
wobei die Steuereinheit (14) des Feldgeräts (3) dazu ausgebildet ist, durch das mobile Endgerät (2) ermittelte und über die Kommunikationsschnittstelle (5) empfangene Positionsinformationen in dem Speicher (15) abzuspeichern,
und wobei die Kommunikationsschnittstelle (4) des mobilen Endgerätes (2) zusätzlich zur Energieübertragung von dem mobilen Endgerät (2) zu dem Feldgerät (3) ausgebildet ist.

3. System nach Anspruch 2, **dadurch gekennzeichnet, dass** das mobile Endgerät (2) dazu ausgebildet ist, mittels der Positionsermittlungseinheit (6) ermittelte Positionsinformationen über die Kommunikationsschnittstelle (4) an das Feldgerät (3) zu übertragen, wobei die mittels der Positionsermittlungseinheit (6) ermittelten Positionsinformationen als repräsentativ für die Position des Feldgeräts (3) angenommen werden.

4. System nach Anspruch 2 oder 3, **dadurch gekennzeichnet, dass** das mobile Endgerät (2) dazu ausgebildet ist, eine relative Position des Feldgeräts (3) relativ zu dem mobilen Endgerät (2) zu ermitteln und basierend auf mittels der Positionsermittlungseinheit (6) ermittelten Positionsinformationen und der relativen Position des Feldgeräts (3) angepasste Positionsinformationen für das Feldgerät (3) zu ermitteln und die angepassten Positionsinformationen über die Kommunikationsschnittstelle (4) an das Feldgerät (3) zu übertragen.

5. System nach einem der Ansprüche 2 bis 4, **dadurch gekennzeichnet, dass** die Feldgeräteelektronik (12) zum Zugreifen und/oder Nutzen von in dem Speicher (15) abgelegten Positionsinformationen ausgebildet ist.

6. System nach einem der Ansprüche 2 bis 5, **dadurch gekennzeichnet, dass** die Kommunikationsschnittstelle (4) des mobilen Endgerätes (2) und/oder die Kommunikationsschnittstelle (5) des Feldgeräts (3) für eine drahtlose, vorzugsweise funkbasierte, Kommunikation mit einer maximalen Reichweite von 10 Metern, besonders bevorzugter Weise mit einer maximalen Reichweite von 5 Metern, ganz besonders bevorzugter Weise mit einer maximalen Reichweite von 1 Meter, weiter bevorzugter Weise mit einer maximalen Reichweite von 0,5 Metern ausgebildet ist.

7. System nach einem der Ansprüche 2 bis 6, **dadurch gekennzeichnet, dass** die Kommunikationsschnittstelle (4) des mobilen Endgerätes (2) und die Kommunikationsschnittstelle (5) des Feldgeräts (3) auf Bluetooth, Bluetooth LE, NFC - Near Field Communication - oder Qi basieren.

8. System nach einem der Ansprüche 2 bis 7, **dadurch gekennzeichnet, dass** das Feldgerät (3) eine Energieversorgung, vorzugsweise in Form einer Batterie und/oder in Form von Mitteln zum Energy-Harvesting, aufweist, wobei die Energieversorgung zur Versorgung von zumindest Teilen der Feldgeräteelektronik (12) ausgebildet ist.

9. System nach einem der Ansprüche 2 bis 8, **dadurch gekennzeichnet, dass** das Feldgerät (3) eine weitere Kommunikationsschnittstelle (18) aufweist, wobei die weitere Kommunikationsschnittstelle (18) vorzugsweise für eine Kommunikation mit einem Bus (19) ausgebildet ist.

10. System nach Anspruch 9, **dadurch gekennzeichnet, dass** die weitere Kommunikationsschnittstelle (19) dazu ausgebildet ist, zur Energieübertragung zur Versorgung von zumindest Teilen der Feldgeräteelektronik (12) genutzt zu werden.

11. System nach einem der Ansprüche 2 bis 10, **dadurch gekennzeichnet, dass** die Positionsermittlungseinheit (6) einen Empfänger für ein GNSS - Global Navigation Satellite System - umfasst und zum Ermitteln von globalen Positionsinformationen basierend auf Signalen aus dem GNSS ausgebildet ist.

12. System nach einem der Ansprüche 2 bis 11, **dadurch gekennzeichnet, dass** die Positionsermittlungseinheit (6) zum Empfangen von Beacon-Signalen von mehreren Sendern bekannter Position und zum Ermitteln einer absoluten oder relativen Position durch Auswerten empfangener Beacon-Signale ausgebildet ist.

13. Verfahren zum Speichern von Positionsinformationen in einem Feldgerät (3) gemäß Anspruch 1 unter Nutzung eines mobilen Endgeräts (2), vorzugsweise zur Verwendung in einem System (1) nach einem der Ansprüche 2 bis 12, wobei das Feldgerät (3) und das mobile Endgerät (2) jeweils eine Kommunikationsschnittstelle (4, 5) für einen wechselseitigen Austausch von Daten, vorzugsweise in einem Nahbereich, umfassen und das Feldgerät (3) eine Feldgeräteelektronik (12) mit einem Speicher (15) aufweist, umfassend:
Ermitteln (S2) von Positionsinformationen für ein mobiles Endgerät (2) mittels einer Positionsermittlungseinheit (6) des mobilen Endgeräts (2),
Übermitteln (S3) der Positionsinformationen oder angepasster Positionsinformationen von dem mobilen Endgerät (2) an das Feldgerät (3),
Empfangen (S4) der Positionsinformationen oder der angepassten Positionsinformationen bei dem Feldgerät (3) als empfangene Positionsinformationen,
Abspeichern (S5) der empfangenen Positionsinformationen als für die Position des Feldgerät repräsentative Positionsinformationen in dem Speicher (15),
Übertragen von Energie von dem mobilen Endgerät (2) zu dem Feldgerät (3) anhand entsprechend ausgebildeter Kommunikationsschnittstellen (4, 5) des mobilen Endgeräts (2) und des Feldgeräts (3) und
Nutzen der über die Kommunikationsschnittstellen (4, 5) übertragenen Energie zum Versorgen der Steuereinheit (14) und des Speichers (15) des Feldgeräts (3).

## Claims

1. Field device (3) with a memory for position information, comprising:
at least one sensor (11) and field device electronics (12), wherein the at least one sensor (11) in each case has at least one sensing unit for detecting a physical variable and wherein the field device electronics (12) is designed to control the at least one sensor (11),
a memory (15), which is designed to store position information and is arranged in the field device electronics (12),
a communication interface (5) which is designed for a two-way exchange of data with a mobile terminal (2), preferably in a close range, and for receiving position information from the mobile terminal (2),
a control unit (14) which is connected in a communicating manner to the communication interface (5) and the memory (15) and is designed to store position information received via the communication interface (5) in the memory (15),
wherein the communication interface (5) of the field device (3) is additionally designed to transmit energy from the mobile terminal (2) to the field device (3), and wherein energy transmitted via the communication interfaces (4, 5) can be used to supply the control unit (14) and the memory (15) of the field device (3).

2. A system for storing position information in a field device (3), said system at least comprising a field device (3) according to claim 1 and a mobile terminal (2),
wherein the mobile terminal (2) comprises a communication interface (4) and a position determination unit (6), wherein the position determination unit (6) is designed to determine position information for describing the position of the mobile terminal (2) in a space,
wherein the communication interface (4) of the mobile terminal (2) and the communication interface (5) of the field device (3) are designed for the mutual exchange of data, preferably within a short range, and for the transmission of position information from the mobile terminal (2) to the field device (3),
wherein the control unit (14) of the field device (3) is designed to store position information determined by the mobile terminal (2) and received via the communication interface (5) in the memory (15),
and wherein the communication interface (4) of the mobile terminal (2) is additionally designed for power transmission from the mobile terminal (2) to the field device (3)

3. The system according to claim 2, **characterised in that** the mobile terminal (2) is designed to transmit position information determined by means of the position determination unit (6) to the field device (3) via the communication interface (4), wherein the position information determined by means of the position determination unit (6) is assumed to be representative of the position of the field device (3).

4. The system according to claim 2 or 3, **characterised in that** the mobile terminal (2) is designed to determine a relative position of the field device (3) relative to the mobile terminal (2) and to determine adapted position information for the field device (3) based on position information determined by means of the position determination unit (6) and the relative position of the field device (3) and to transmit the adapted position information to the field device (3) via the communication interface (4).

5. The system according to any one of claims 2 to 4, **characterised in that** the field device electronics (12) is designed to access and/or use position information stored in the memory (15).

6. The system according to any one of claims 2 to 5, **characterised in that** the communication interface (4) of the mobile terminal (2) and/or the communication interface (5) of the field device (3) is designed for wireless, preferably radio-based, communication with a maximum range of 10 metres, particularly preferably with a maximum range of 5 metres, very particularly preferably with a maximum range of 1 metre, more preferably with a maximum range of 0.5 metres.

7. The system according to any one of claims 2 to 6, **characterised in that** the communication interface (4) of the mobile terminal (2) and the communication interface (5) of the field device (3) are based on Bluetooth, Bluetooth LE, NFC - Near Field Communication - or Qi.

8. The system according to any one of claims 2 to 7, **characterised in that** the field device (3) has a power supply, preferably in the form of a battery and/or in the form of means for energy harvesting, wherein the power supply is designed to supply at least parts of the field device electronics (12).

9. The system according to any one of claims 2 to 8, **characterised in that** the field device (3) has a further communication interface (18), wherein the further communication interface (18) is preferably designed for communication with a bus (19).

10. The system according to claim 9, **characterised in that** the further communication interface (19) is designed to be used for energy transmission for supplying at least parts of the field device electronics (12).

11. The system according to any one of claims 2 to 10, **characterised in that** the position determination unit (6) comprises a receiver for a GNSS - Global Navigation Satellite System - and is designed to determine global position information based on signals from the GNSS.

12. The system according to any one of claims 2 to 11, **characterised in that** the position determination unit (6) is designed to receive beacon signals from a plurality of transmitters of known position and to determine an absolute or relative position by evaluating received beacon signals.

13. A method for storing position information in a field device (3) according to claim 1 using a mobile terminal (2), preferably for use in a system (1) according to any one of claims 2 to 12, wherein the field device (3) and the mobile terminal (2) each comprise a communication interface (4, 5) for a mutual exchange of data, preferably within a short range, and the field device (3) has field device electronics (12) with a memory (15), said method comprising:
determining (S2) position information for a mobile terminal (2) by means of a position determination unit (6) of the mobile terminal (2),
transmitting (S3) the position information or adapted position information from the mobile terminal (2) to the field device (3),
receiving (S4) the position information or the adapted position information at the field device (3) as received position information,
storing (S5) the received position information as position information representative of the position of the field device in the memory (15)
Transmission of energy from the mobile terminal (2) to the field device (3) by means of correspondingly designed communication interfaces (4, 5) of the mobile terminal (2) and the field device (3) and
utilization of the energy transmitted via the communication interfaces (4, 5) for supplying the control unit (14) and the memory (15) of the field device (3).

## Revendications

1. Appareil de terrain (3), ayant une mémoire pour des informations de position, comprenant :
au moins un capteur (11) et une électronique (12) d'appareil de terrain, dans lequel le au moins un capteur (11) présente respectivement au moins une unité de détection pour détecter une grandeur physique et dans lequel l'électronique (12) d'appareil de terrain est réalisée de façon à piloter le au moins un capteur (11), une mémoire (15) qui est réalisée de façon à stocker des informations de position et est disposée dans l'électronique (12) d'appareil de terrain,
une interface de communication (5), qui est réalisée pour un échange réciproque de données avec un terminal mobile (2), de préférence dans une zone proche, et pour recevoir des informations de position du terminal mobile (2),
une unité de commande (14) qui est connectée de façon communicante à l'interface de communication (5) et à la mémoire (15), et qui est réalisée de façon à sauvegarder dans la mémoire (15) des informations de position reçues par l'intermédiaire de l'interface de communication (5),
dans lequel l'interface de communication (5) de l'appareil de terrain (3) est réalisée en plus pour la transmission d'énergie du terminal mobile (2) vers l'appareil de terrain (3), et dans lequel l'énergie transmise par l'intermédiaire des interfaces de communication (4, 5) peut être utilisée pour alimenter l'unité de commande (14) et la mémoire (15) de l'appareil de terrain (3).

2. Système de stockage d'informations de position dans un appareil de terrain (3), comprenant au moins un appareil de terrain (3) selon la revendication 1 et un terminal mobile (2),
dans lequel le terminal mobile (2) comprend une interface de communication (4) et une unité de détermination de position (6), dans lequel l'unité de détermination de position (6) est réalisée pour déterminer des informations de position de façon à décrire la position du terminal mobile (2) dans un espace,
dans lequel l'interface de communication (4) du terminal mobile (2) et l'interface de communication (5) de l'appareil de terrain (3) sont réalisées pour l'échange réciproque de données, de préférence dans une zone proche, et pour une transmission d'informations de position du terminal mobile (2) à l'appareil de terrain (3),
dans lequel l'unité de commande (14) de l'appareil de terrain (3) est réalisée de façon à sauvegarder dans la mémoire (15) des informations de position déterminées par le terminal mobile (2) et reçues par l'intermédiaire de l'interface de communication (5), et dans lequel l'interface de communication (4) du terminal mobile (2) est en outre réalisée pour la transmission d'énergie du terminal mobile (2) vers l'appareil de terrain (3).

3. Système selon la revendication 2, **caractérisé en ce que** le terminal mobile (2) est réalisé pour transmettre des informations de position déterminées au moyen de l'unité de détermination de position (6) par l'intermédiaire de l'interface de communication (4) à l'appareil de terrain (3), dans lequel les informations de position déterminées au moyen de l'unité de détermination de position (6) sont considérées comme représentatives de la position de l'appareil de terrain (3).

4. Système selon la revendication 2 ou la revendication 3, **caractérisé en ce que** le terminal mobile (2) est réalisé pour
déterminer une position relative de l'appareil de terrain (3) par rapport au terminal mobile (2) et déterminer, sur la base d'informations de position déterminées au moyen de l'unité de détermination de position (6) et de la position relative de l'appareil de terrain (3), déterminer des informations de position adaptées pour l'appareil de terrain (3) et pour transmettre les informations de position adaptées à l'appareil de terrain (3) par l'intermédiaire de l'interface de communication (4).

5. Système selon l'une quelconque des revendications 2 à 4, **caractérisé en ce que** l'électronique (12) d'appareil de terrain est réalisée pour accéder et/ou utiliser des informations de position sauvegardées dans la mémoire (15).

6. Système selon l'une quelconque des revendications 2 à 5, **caractérisé en ce que** l'interface de communication (4) du terminal mobile (2) et/ou l'interface de communication (5) de l'appareil de terrain (3) sont réalisées pour une communication sans fil,
de préférence basée sur la radio avec une portée maximale de 10 mètres, de manière particulièrement préférée avec une portée maximale de 5 mètres, de manière très particulièrement préférée avec une portée maximale de 1 mètre, de manière encore préférée avec une portée maximale de 0,5 mètre.

7. Système selon l'une quelconque des revendications 2 à 6, **caractérisé en ce que** l'interface de communication (4) du terminal mobile (2) et l'interface de communication (5) de l'appareil de terrain (3) sont basées sur Bluetooth, Bluetooth LE, NFC - Near Field Communication - ou Qi.

8. Système selon l'une quelconque des revendications 2 à 7, **caractérisé en ce que** l'appareil de terrain (3) présente une alimentation en énergie, de préférence sous la forme d'une batterie et/ou sous la forme de moyens de récupération d'énergie, dans lequel l'alimentation en énergie est réalisée pour alimenter au moins des parties de l'électronique (12) d'appareil de terrain.

9. Système selon l'une quelconque des revendications 2 à 8, **caractérisé en ce que** l'appareil de terrain (3) présente une autre interface de communication (18), dans lequel l'autre interface de communication (18) est réalisée de préférence pour une communication avec un bus (19).

10. Système selon la revendication 9, **caractérisé en ce que** l'autre interface de communication (19) est réalisée pour être utilisée pour la transmission d'énergie pour l'alimentation d'au moins des parties de l'électronique (12) d'appareil de terrain.

11. Système selon l'une quelconque des revendications 2 à 10, **caractérisé en ce que** l'unité de détermination de position (6) comprend un récepteur pour un GNSS et est configurée pour déterminer des informations de position globales sur la base de signaux provenant du GNSS.

12. Système selon l'une quelconque des revendications 2 à 11, **caractérisé en ce que** l'unité de détermination de position (6) est réalisée pour recevoir des signaux de balise de plusieurs émetteurs de position connue et pour déterminer une position absolue ou relative par l'évaluation de signaux de balise reçus.

13. Procédé de stockage d'informations de position dans un appareil de terrain (3) selon la revendication 1 en utilisant un terminal mobile (2), de préférence pour l'utilisation dans un système (1) selon l'une quelconque des revendications 2 à 12, dans lequel l'appareil de terrain (3) et le terminal mobile (2) comprennent chacun une interface de communication (4, 5) pour un échange réciproque de données, de préférence dans une zone proche, et l'appareil de terrain (3) présente une électronique (12) d'appareil de terrain ayant une mémoire (15), comprenant :
la détermination (S2) d'informations de position pour un terminal mobile (2) au moyen d'une unité de détermination de position (6) du terminal mobile (2),
la transmission (S3) des informations de position ou des informations de position adaptées du terminal mobile (2) à l'appareil de terrain (3),
la réception (S4) des informations de position ou des informations de position adaptées au niveau de l'appareil de terrain (3) en tant qu'informations de position reçues,
la sauvegarde (S5) dans la mémoire (15) des informations de position reçues comme des informations de position représentatives de la position de l'appareil de terrain,
la transmission d'énergie depuis le terminal mobile (2) vers l'appareil de terrain (3) au moyen d'interfaces de communication (4, 5) du terminal mobile (2) et de l'appareil de terrain (3) réalisées en conséquence et
l'utilisation de l'énergie transmise par l'intermédiaire des interfaces de communication (4, 5) pour alimenter l'unité de commande (14) et la mémoire (15) de l'appareil de terrain (3).
